# EUROPEAN PATENT APPLICATION

(11) **EP 4 804 623 A1**
(43) Date of publication of application: **09.09.2026**
(21) Application number: 24884037.3
(22) Date of filing: 16.07.2024
(51) Int. Cl.: H04W 36/32, H04W 52/02, H04B 7/185

(54) **LOW-ALTITUDE BASE STATION AND GROUND BASE STATION COLLABORATIVE MANAGEMENT METHOD, ELECTRONIC APPARATUS, AND MEDIUM**

(30) Priority: 02.11.2023 CN 202311455295
(71) Applicant: ZTE CORPORATION, Shenzhen, Guangdong 518057 (CN)
(72) Inventor: WANG, Juntao, Shenzhen, Guangdong 518057 (CN); YANG, Jinxing, Shenzhen, Guangdong 518057 (CN); TAN, Yonglong, Shenzhen, Guangdong 518057 (CN); ZHANG, Jian, Shenzhen, Guangdong 518057 (CN); CHEN, Le, Shenzhen, Guangdong 518057 (CN)
(74) Representative: Cristinelli, Luca
(86) International application number: PCT/CN2024/105772
(87) International publication number: WO 2025/092029

(57) **Abstract**

Provided a low-altitude base station and ground base station collaborative management method, an electronic device and a medium, applied to a low-altitude base station. The method comprises: receiving a cell change request initiated by a flight device, and acquiring a preset cell correspondence table and flight state information of the flight device from a low-altitude resource pool based on the cell change request; determining, according to the preset cell correspondence table, neighbor cell information of a cell of the low-altitude base station; and adjusting, according to the neighbor cell information of the cell of the low-altitude base station and the flight state information, an operating state of a neighbor cell of the cell of the low-altitude base station.

## Description

### Cross-Reference to Related Application

The present disclosure is based on and claims the priority of Chinese Patent Application No. 202311455295.7, filed on November 2, 2023, the disclosure of which is incorporated herein by reference in its entirety.

### Technical Field

Embodiments of the present disclosure relate to the field of communications, and in particular, to a low-altitude base station and ground base station collaborative management method, an electronic device and a medium.

### Background

With the rapid development and maturation of civilian drone technology, drone applications have gradually expanded from line-of-sight applications to beyond-line-of-sight applications, and from the consumer field to multiple industry fields such as inspection, agriculture, logistics, and security. In order to ensure safe flight of low-altitude drones, it is necessary to establish an effective low-altitude drone traffic management system to realize monitoring, identification, control, and command of drones. However, conventional mobile communication networks are intended to satisfy communication demands between people, and antennas of mobile base stations face the ground, resulting in insufficient aerial coverage and thus being unable to satisfy communication demands of low-altitude drones.

With the development of the low-altitude economy, 5G networks have become the best choice for low-altitude sensing and communication integrated services. However, when a low-altitude base station communicates with a ground base station, due to a wide coverage range of a cell of the low-altitude base station, a one-to-many relationship exists between the cell of the low-altitude base station and a cell of the ground base station, which makes neighbor cell relationship maintenance of the cell of the low-altitude base station complicated, thereby causing resource consumption.

### Summary

Embodiments of the present disclosure provide a low-altitude base station and ground base station collaborative management method, an electronic device and a medium, so as to at least solve the problem in the related art that neighbor cell relationship maintenance of the cell of the low-altitude base station is complicated, thereby causing resource consumption.

According to one embodiment of the present disclosure, a low-altitude base station and ground base station collaborative management method is provided, which is applied to the low-altitude base station. The method includes:
receiving a cell change request initiated by a flight device, and acquiring a preset cell correspondence table and flight state information of the flight device from a low-altitude resource pool based on the cell change request;
determining, according to the preset cell correspondence table, neighbor cell information of a cell of the low-altitude base station; and
adjusting, according to the neighbor cell information of the cell of the low-altitude base station and the flight state information, an operating state of a neighbor cell of the cell of the low-altitude base station.

According to another embodiment of the present disclosure, a computer-readable storage medium is further provided. The computer-readable storage medium stores a computer program. The computer program is configured to, when being run, implement steps in any one of the above method embodiments.

According to yet another embodiment of the present disclosure, an electronic device is further provided and includes a memory and a processor. The memory stores a computer program. The processor is configured to run the computer program to execute steps in any one of the above method embodiments.

### Brief Description of the Drawings

FIG. 1 is a hardware structure block diagram of a mobile terminal for a low-altitude base station and ground base station collaborative management method according to an embodiment of the present disclosure.
FIG. 2 is a flowchart of a low-altitude base station and ground base station collaborative management method according to an embodiment of the present disclosure.
FIG. 3 is a low-altitude base station pooling networking diagram according to an embodiment of the present disclosure.
FIG. 4 is a low-altitude base station pooling flowchart according to an embodiment of the present disclosure.
FIG. 5 is a schematic diagram of a correspondence table between a cell of a low-altitude base station and a cell of a ground base station according to an embodiment of the present disclosure.
FIG. 6 is a schematic diagram of a relationship between a cell of a low-altitude base station and a cell of a ground base station according to an embodiment of the present disclosure.
FIG. 7 is a schematic diagram of a relationship between a low-altitude base station and a ground base station according to an embodiment of the present disclosure.
FIG. 8 is a schematic diagram of an energy saving state of a cell of a low-altitude base station according to an embodiment of the present disclosure.
FIG. 9 is a flowchart of neighbor cell information acquisition according to an embodiment of the present disclosure.

### Detailed Description of the Embodiments

Hereinafter, implementations of the present disclosure will be described in detail with reference to the drawings and in conjunction with the embodiments.

It should be noted that the terms "first", "second", etc. in the description, claims, and the above drawings of the present disclosure are used to distinguish similar objects, and are not necessarily used to describe a specific order or sequence.

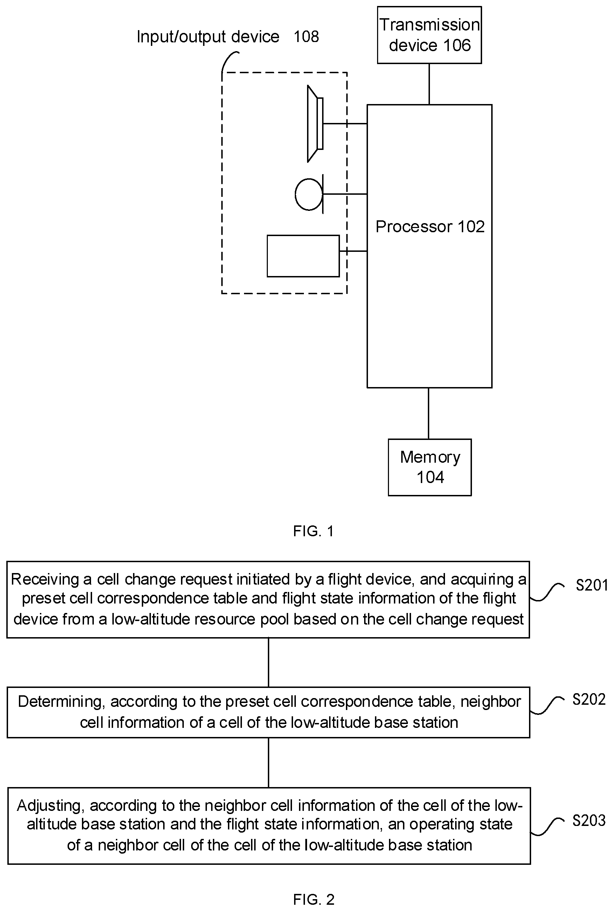

The method embodiments provided in the embodiments of the present disclosure can be executed in a mobile terminal, a computer terminal, or a similar computing device. Taking execution on a mobile terminal as an example, FIG. 1 is a hardware structure block diagram of a mobile terminal for a low-altitude base station and ground base station collaborative management method according to an embodiment of the present disclosure. As shown in FIG. 1, the mobile terminal may include one or more (only one is shown in FIG. 1) processors 102 (the processors 102 may include, but are not limited to, processing devices such as a microprocessor (MCU) or a programmable logic device (FPGA)) and a memory 104 for storing data, wherein the mobile terminal may further include a transmission device 106 and an input/output device 108 for communication functions. Those of ordinary skill in the art can understand that the structure shown in FIG. 1 is merely illustrative and does not limit the structure of the mobile terminal. For example, the mobile terminal may also include more or fewer components than those shown in FIG. 1, or have a different configuration from that shown in FIG. 1.

The memory 104 may be used to store a computer program, for example, a software program and a module of application software, such as a computer program corresponding to the low-altitude base station and ground base station collaborative management method in the embodiments of the present disclosure. The processor 102 executes various functional applications and data processing, i.e., implements the above method, by running the computer program stored in the memory 104. The memory 104 may include a high-speed random access memory, and may also include a non-volatile memory, such as one or more magnetic storage devices, a flash memory, or other non-volatile solid-state memories. In some examples, the memory 104 may further include a memory remotely located relative to the processor 102, and these remote memories may be connected to the mobile terminal via a network. Examples of the above network include, but are not limited to, the Internet, intranets, local area networks, mobile communication networks, and combinations thereof.

The transmission device 106 is used to receive or send data via a network. Specific examples of the above network may include a wireless network provided by a communication provider of the mobile terminal. In one example, the transmission device 106 includes a network adapter (Network Interface Controller, NIC for short), which may be connected to other network devices via a base station to communicate with the Internet. In one example, the transmission device 106 may be a radio frequency (RF for short) module, which is used to communicate with the Internet wirelessly.

In the present embodiment, a low-altitude base station and ground base station collaborative management method is provided, applied to a low-altitude base station. FIG. 2 is a flowchart of a low-altitude base station and ground base station collaborative management method according to an embodiment of the present disclosure. As shown in FIG. 2, the process includes the following steps:
Step S201: receiving a cell change request initiated by a flight device, and acquiring a preset cell correspondence table and flight state information of the flight device from a low-altitude resource pool based on the cell change request.

In the embodiments of the present disclosure, a low-altitude resource pool may be pre-established. The low-altitude resource pool may include a plurality of low-altitude base stations and cells of the low-altitude base stations corresponding to the plurality of low-altitude base stations. For example, at least one low-altitude resource pool may be established according to low-altitude base stations corresponding to a flight route of the flight device.

As an example, a correspondence relationship between a cell of the low-altitude base station and a cell of the ground base station may be determined in advance based on a matching relationship between the low-altitude base station and the ground base station in the low-altitude resource pool, and a cell correspondence table may be generated. The low-altitude base station in the low-altitude resource pool may maintain the preset cell correspondence table.

As an example, in a case where the low-altitude base station in the low-altitude resource pool receives the cell change request initiated by the flight device, the low-altitude base station may acquire the preset cell correspondence table and the flight state information of the flight device from the low-altitude resource pool based on the cell change request.

In an exemplary embodiment, before receiving the cell change request initiated by the flight device, the method further includes:
Step S200: establishing, based on a matching relationship between the low-altitude base station and the ground base station and a transmission relationship between the ground base station and an adjacent base station of the ground base station, a communication link with an adjacent base station of the low-altitude base station to form the low-altitude resource pool.

As an example, before receiving the cell change request initiated by the flight device, the low-altitude base station may establish, based on the matching relationship between the low-altitude base station and the ground base station and the transmission relationship between the ground base station and the adjacent base station of the ground base station, the communication link with the adjacent base station of the low-altitude base station to form the low-altitude resource pool.

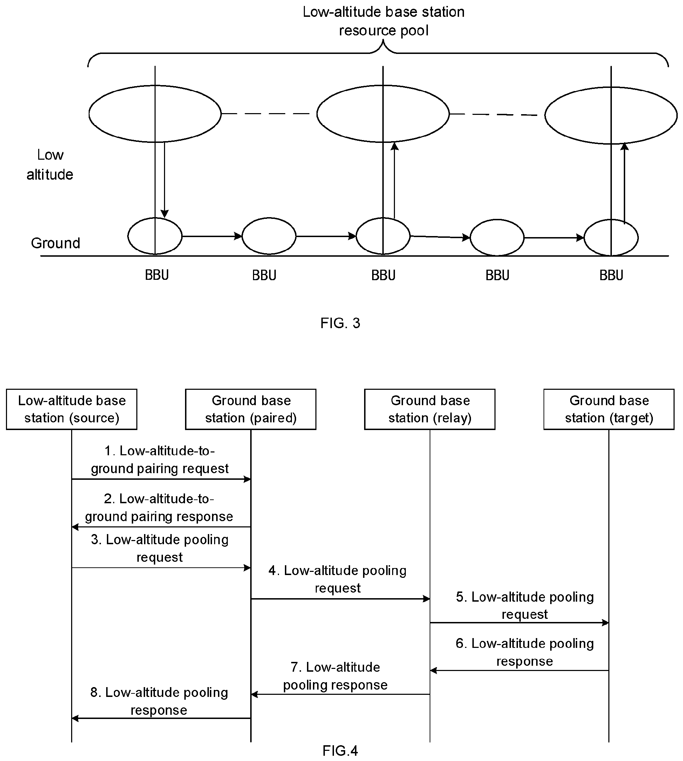

For example, FIG. 3 is a low-altitude base station pooling networking diagram according to an embodiment of the present disclosure. As shown in FIG. 3, cells of low-altitude base stations have a relatively wide coverage range and cannot achieve interconnection and intercommunication in terms of physical positions. The low-altitude base station and the ground base station may pre-establish a pairing relationship, and then, based on a transmission relationship between ground base stations (such as Base Band Units (BBUs)), establish communication links between low-altitude base stations to form a low-altitude resource pool among low-altitude base stations.

There may be multiple manners for forming the low-altitude resource pool, for example:
Manner 1: establishing communication links between low-altitude base stations based on physical configuration manners of the low-altitude base station and the ground base station.

Manner 1 may include two scenarios:

### 1) Co-site deployment scenario of a low-altitude base station and a ground base station.

The low-altitude base station may carry a "low-altitude" identifier. The low-altitude base station and the ground base station share a transmission resource. The low-altitude base station may rely on the ground base station to establish Xn transmission.

Assume that the low-altitude base station that initiates the formation of the low-altitude resource pool is a source low-altitude base station, and the ground base station that shares the transmission resource with the source low-altitude base station is a source ground base station. The source low-altitude base station may form the low-altitude resource pool with at least one target low-altitude base station, and the target low-altitude base station shares a transmission resource with a target ground base station.

Then, when forming the low-altitude resource pool with the target low-altitude base station, the source low-altitude base station may initiate, via the ground base station with which it shares the transmission resource, a request for establishing a communication link between low-altitude base stations to the target ground base station, and the request may carry an address of the source low-altitude base station.

The target ground base station receives the request for establishing a communication link between low-altitude base stations, and forwards the request to the target low-altitude base station. The target low-altitude base station responds to the request for establishing a communication link between low-altitude base stations, and sends a response message carrying an address of the target low-altitude base station to the target ground base station.

The target ground base station receives the response message carrying the address of the target low-altitude base station, and forwards it to the ground base station that shares the transmission resource with the source low-altitude base station, and the ground base station that shares the transmission resource with the source low-altitude base station sends it to the source low-altitude base station.

The source low-altitude base station may receive the response message carrying the address of the target low-altitude base station, and establish a communication link with the target low-altitude base station based on the address of the target low-altitude base station in the response message, thereby forming the low-altitude resource pool.

### 2) Non-co-site deployment scenario of a low-altitude base station and a ground base station.

The low-altitude base station may carry a "low-altitude" identifier. The low-altitude base station and the ground base station do not share a transmission resource. The low-altitude base station may initiate requests for establishing Xn communication links to other low-altitude base stations and the ground base station, respectively.

Assume that the low-altitude base station that initiates the formation of the low-altitude resource pool is a source low-altitude base station, and other low-altitude base stations serve as target low-altitude base stations for forming the low-altitude resource pool.

The source low-altitude base station may initiate requests for establishing Xn communication links to the target low-altitude base station and the ground base station, respectively. After receiving the request message for establishing an Xn communication link, the target low-altitude base station or the ground base station may initiate an Xn communication link establishment response, thereby establishing a communication link between the low-altitude base station and the ground base station or a communication link between low-altitude base stations.

If the target low-altitude base station or the ground base station does not initiate an Xn communication link establishment response, i.e., fails to establish the communication link between the low-altitude base station and the ground base station or the communication link between low-altitude base stations, a path may also be established via a core network. The manner of establishing a path via the core network is a prior art solution and will not be described in detail in the embodiments of the present disclosure.

Manner 2: establishing communication links between low-altitude base stations based on a service-triggering manner.

When the flight device moves between cells of low-altitude base stations, if it fails to hand over a cell in time, the service will fail, thereby triggering service re-establishment to a cell of a target low-altitude base station. The cell of the target low-altitude base station may initiate a context request to the source low-altitude base station, and trigger the target low-altitude base station and the source low-altitude base station to establish an Xn communication link by re-establishing the context.

The establishment of the Xn link between low-altitude base stations may be a dynamic maintenance process. The Xn link may be established or released according to services, thereby achieving flexible adjustment of dynamic resources.

In an exemplary embodiment, step S200 may specifically include the following steps:
Step S2001: sending a low-altitude base station pooling request to the ground base station matched with the low-altitude base station, so that the ground base station sends the low-altitude base station pooling request to the adjacent base station of the ground base station according to the low-altitude base station pooling request and the transmission relationship between the ground base station and the adjacent base station of the ground base station.
Step S2002: forwarding, by the adjacent base station of the ground base station, the low-altitude base station pooling request to the adjacent base station of the low-altitude base station that is matched with the adjacent base station of the ground base station.
Step S2003: in response to the adjacent base station of the low-altitude base station responding to the low-altitude base station pooling request, receiving, by the adjacent base station of the ground base station, a low-altitude base station pooling response message sent by the adjacent base station of the low-altitude base station, and forwarding the low-altitude base station pooling response message to the ground base station.
Step S2004: receiving the low-altitude base station pooling response message sent by the ground base station, and establishing the communication link with the adjacent base station of the low-altitude base station to form the low-altitude resource pool.

As an example, the low-altitude base station that initiates the formation of the low-altitude resource pool may be taken as a source low-altitude base station, and low-altitude base stations in the low-altitude resource pool other than the source low-altitude base station may be taken as target low-altitude base stations.

For example, when the source low-altitude base station is to initiate the formation of the low-altitude resource pool, the source low-altitude base station may send a low-altitude base station pooling request to a source ground base station matched with the source low-altitude base station.

The source ground base station may receive the low-altitude base station pooling request, and based on the low-altitude base station pooling request and transmission configuration of its own interface, send the low-altitude base station pooling request to an adjacent base station of a ground base station that is in communication connection with the source ground base station.

As an example, the source ground base station may determine, based on the transmission configuration of its own interface, an adjacent base station of a ground base station that has a transmission relationship with the source ground base station. When receiving the low-altitude base station pooling request, the source ground base station may send the low-altitude base station pooling request to the adjacent base station of the ground base station based on the low-altitude base station pooling request and the transmission relationship between the ground base station and the adjacent base station of the ground base station.

The adjacent base station of the ground base station may receive the low-altitude base station pooling request, and forward the low-altitude base station pooling request to a target low-altitude base station matched with the adjacent base station of the ground base station.

The target low-altitude base station may receive the low-altitude base station pooling request, and send a low-altitude base station pooling response message to the adjacent base station of the ground base station.

The adjacent base station of the ground base station may receive the low-altitude base station pooling response message, and forward it to the source ground base station, so that the source ground base station feeds back the low-altitude base station pooling response message to the source low-altitude base station.

The source low-altitude base station may receive the low-altitude base station pooling response message, such that communication links are established between low-altitude base stations to form the low-altitude resource pool.

As an example, the low-altitude base station pooling request sent by the source low-altitude base station and the low-altitude base station pooling response message sent by the target low-altitude base station may respectively carry information that needs to be transmitted between low-altitude base stations, such as flight trajectory, service monitoring status, and other information.

In an exemplary embodiment, before step S2001, the method may further include:
determining a base station configuration mode of the low-altitude base station and the ground base station, wherein the base station configuration mode includes a co-site configuration of the low-altitude base station and the ground base station;
in response to the low-altitude base station and the ground base station being in the co-site configuration, sending a matching request to the ground base station, so that the ground base station performs a matching response according to the matching request; and
receiving the matching response sent by the ground base station, establishing a matching relationship between the low-altitude base station and the ground base station, and maintaining the matching relationship.

As an example, before initiating the formation of the low-altitude resource pool, the low-altitude base station may establish a matching relationship with a corresponding ground base station based on the base station configuration mode of the low-altitude base station and the ground base station.

As an example, in a case where the base station configuration mode of the low-altitude base station and the ground base station is a co-site configuration, the low-altitude base station may send a matching request to the ground base station that is in a co-site configuration with the low-altitude base station, where the matching request may carry information such as a low-altitude base station ID, a low-altitude base station IP address, a base station type, and the like.

As an example, the ground base station that is in a co-site configuration with the low-altitude base station may receive the matching request, and based on information such as the low-altitude base station ID, the low-altitude base station IP address, the base station type, etc. in the matching request, send a matching response to the low-altitude base station. The matching response may carry information such as a ground base station ID, a ground base station IP address, a base station type, and the like.

As an example, the low-altitude base station may receive the matching response sent by the ground base station, and establish a matching relationship with the ground base station based on information such as the ground base station ID, the ground base station IP address, the base station type, etc. in the matching response.

As an example, the low-altitude base station side may store the matching relationship between the low-altitude base station and the ground base station, and maintain the matching relationship between the low-altitude base station and the ground base station.

In an exemplary embodiment, the base station configuration mode further includes a non-co-site configuration of the low-altitude base station and the ground base station. Before step S2001, the method may further include:
in response to the low-altitude base station and the ground base station being in the non-co-site configuration, sending a link establishment request to the ground base station and the adjacent base station of the ground base station, respectively;
in response to receiving a link establishment response sent by the ground base station or the adjacent base station of the ground base station, establishing a communication link with the ground base station or the adjacent base station of the ground base station, and determining the ground base station or the adjacent base station of the ground base station that sent the link establishment response as the ground base station matched with the low-altitude base station.

As an example, in a case where the base station configuration mode of the low-altitude base station and the ground base station is a non-co-site configuration, it is necessary to first establish a communication connection between the low-altitude base station and a corresponding ground base station.

As an example, the low-altitude base station may send a link establishment request to the ground base station and the adjacent base station of the ground base station, respectively, where the link establishment request may carry information such as a low-altitude base station ID, a low-altitude base station IP address, a base station type, and the like.

As an example, the ground base station and/or the adjacent base station of the ground base station may receive the link establishment request, and based on information such as the low-altitude base station ID, the low-altitude base station IP address, the base station type, etc. in the link establishment request, send a link establishment response to the low-altitude base station. The link establishment response may carry information such as a ground base station ID, a ground base station IP address, a base station type, and the like.

As an example, in response to receiving the link establishment response sent by the ground base station or the adjacent base station of the ground base station, the low-altitude base station may establish a communication link with the ground base station or the adjacent base station of the ground base station based on information such as the ground base station ID, the ground base station IP address, the base station type, etc. in the link establishment response of the corresponding ground base station or the adjacent base station of the ground base station, and determine the ground base station or the adjacent base station of the ground base station that sent the link establishment response as the ground base station matched with the low-altitude base station.

The following further describes the process of establishing a low-altitude resource pool through an example.

### Example 1:

FIG. 4 is a low-altitude base station pooling flowchart according to an embodiment of the present disclosure. As shown in FIG. 4:
1. The low-altitude base station (source) initiates a low-altitude-to-ground pairing and matching request to the ground base station (paired).
   The low-altitude base station (source) and the ground base station (matched) may be deployed in manners such as co-site or shared transmission. Intra-site, the low-altitude base station (source) may directly initiate the low-altitude-to-ground pairing and matching request to the ground base station (paired). Inter-site, a 1-to-1 or 1-to-many pairing may be initiated between the low-altitude base station (source) and the ground base station through a request/response manner.
2. The ground base station (paired) initiates a response based on the low-altitude-to-ground pairing and matching request.

Intra-site, the ground base station (paired) may directly respond. Inter-site, it may initiate a response after establishing transmission with the low-altitude base station (source).

After receiving the response, the low-altitude base station (source) may establish a low-altitude-to-ground pairing relationship and maintain the low-altitude-to-ground pairing relationship.

3. The low-altitude base station (source) initiates a low-altitude base station pooling request to the ground base station (matched) that has been successfully paired.

4. The ground base station (matched) receives the low-altitude base station pooling request, and initiates the low-altitude base station pooling request to an associated ground base station (relay) according to its own Xn transmission configuration.

5. The ground base station (relay) receives the low-altitude base station pooling request, and forwards the low-altitude base station pooling request to a low-altitude base station (target).

If the ground base station (relay) is paired with the low-altitude base station (target), the ground base station (relay) may directly forward the low-altitude base station pooling request to the low-altitude base station (target); if the ground base station (relay) is not paired with the low-altitude base station (target), the pairing process of steps 1-2 is repeated.

6. The low-altitude base station (target) receives the low-altitude base station pooling request, generates a low-altitude base station pooling response message based on the low-altitude base station pooling request, and sends the low-altitude base station pooling response message to the ground base station (relay).

7. The ground base station (relay) receives the low-altitude base station pooling response message and forwards it to the ground base station (matched).

8. The ground base station (paired) receives the low-altitude base station pooling response message and feeds back the low-altitude base station pooling response message to the low-altitude base station (source).

In an exemplary embodiment, the method further includes:
in response to the flight device failing to hand over a cell, receiving a request for re-establishing a UE context sent by the adjacent base station of the low-altitude base station, wherein the request for re-establishing a UE context carries a transmission address of the adjacent base station of the low-altitude base station; and
responding to the request for re-establishing a UE context, and establishing, based on the transmission address of the adjacent base station of the low-altitude base station, a communication link with the adjacent base station of the low-altitude base station to form the low-altitude resource pool.

As an example, when a handover initiated by the flight device from a cell of a low-altitude base station to a neighbor cell of the cell of the low-altitude base station fails, the adjacent base station of the low-altitude base station is triggered to send the request for re-establishing a UE context to the low-altitude base station, where the request for re-establishing a UE context may carry the transmission address of the adjacent base station of the low-altitude base station.

As an example, the low-altitude base station may receive the request for re-establishing a UE context, respond to the request for re-establishing a UE context, and establish, based on the transmission address of the adjacent base station of the low-altitude base station in the request for re-establishing a UE context, a communication link with the adjacent base station of the low-altitude base station to form the low-altitude resource pool.

In an exemplary embodiment, before the acquiring a preset cell correspondence table and flight state information of the flight device from a low-altitude resource pool based on the cell change request, the method further includes:
matching, based on the base station configuration mode, the cell of the low-altitude base station and the cell of the ground base station in the low-altitude resource pool to establish the mapping relationship between the cell of the low-altitude base station and the cell of the ground base station.

As an example, the cells of low-altitude base stations and the cells of ground base stations in the low-altitude resource pool may be matched in advance according to a co-site configuration mode of the low-altitude base station and the ground base station or a non-co-site configuration mode of the low-altitude base station and the ground base station, to establish the mapping relationship between a cell of a low-altitude base station and a cell of a ground base station.

For example, if the low-altitude base station and the ground base station are co-sited, the mapping relationship between a cell of the low-altitude base station and a cell of the ground base station may be directly established. If the low-altitude base station and the ground base station are not co-sited, the mapping relationship between a cell of the low-altitude base station and a cell of the ground base station may be established based on engineering parameters of the low-altitude base station and the ground base station (such as base station corresponding cell information, base station longitude and latitude information, base station azimuth information, base station downtilt information, satellite information, etc.), flight device service measurement information, and the like.

As an example, a cell correspondence table may be generated based on the mapping relationship between the cell of the low-altitude base station and the cell of the ground base station.

In the embodiments of the present disclosure, by forming a low-altitude resource pool, cells of low-altitude base stations can interconnect and intercommunicate with each other, making maintenance between the cell of the low-altitude base station and neighbor cell of the cell of the low-altitude base station simpler.

Step S202: determining, according to the preset cell correspondence table, neighbor cell information of a cell of the low-altitude base station.

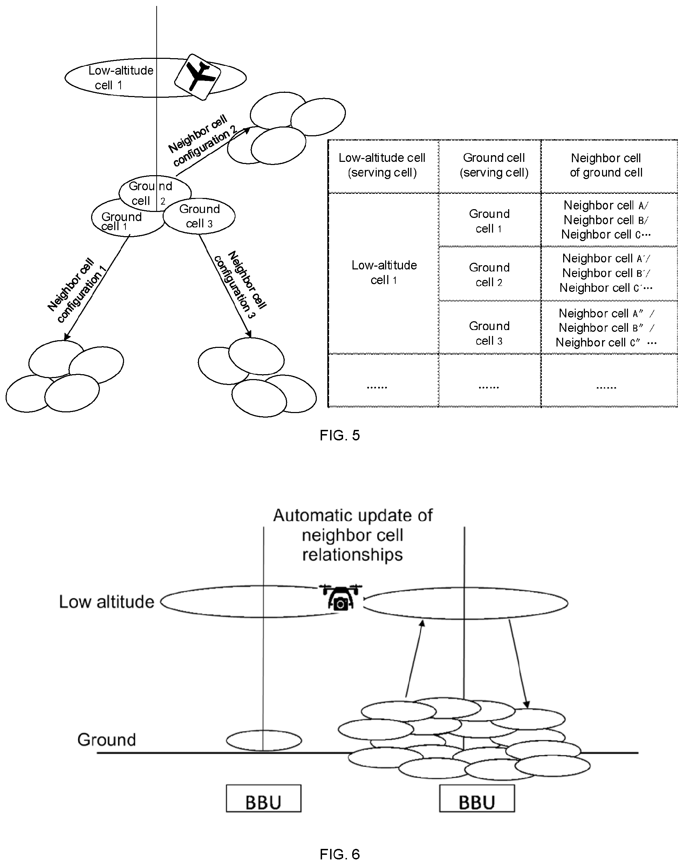

For example, FIG. 5 is a schematic diagram of a correspondence table between a cell of a low-altitude base station and a cell of a ground base station according to an embodiment of the present disclosure. As shown in FIG. 5, the low-altitude base station corresponding to cell 1 of a low-altitude base station may determine, from the cell correspondence table, corresponding cells of ground base stations and neighbor cells corresponding to the cell of the ground base station.

In an exemplary embodiment, the preset cell correspondence table includes a mapping relationship between a cell of the low-altitude base station and a cell of the ground base station. Step S202 may specifically include:
Step S2021: acquiring, from a ground base station matched with the low-altitude base station, neighbor cell information of a cell of the ground base station.
Step S2022: determining, according to the mapping relationship between the cell of the low-altitude base station and the cell of the ground base station, and the neighbor cell information of the cell of the ground base station, the neighbor cell information of the cell of the low-altitude base station.

As an example, the low-altitude base station may acquire, from the ground base station matched with the low-altitude base station, neighbor cell information of a cell of the ground base station. The matched ground base station may send the neighbor cell information of the cell of the matched ground base station to the low-altitude base station. The low-altitude base station may determine, according to the mapping relationship between the cell of the low-altitude base station and the cell of the ground base station in the preset cell correspondence table and the neighbor cell information of the cell of the ground base station, the neighbor cell information of the cell of the low-altitude base station.

For example, FIG. 6 is a schematic diagram of a relationship between a cell of a low-altitude base station and a cell of a ground base station according to an embodiment of the present disclosure. As shown in FIG. 6, when the low-altitude base station receives the cell change request from the flight device, it may automatically update neighbor cell relationships of the cell of the low-altitude base station based on the acquired neighbor cell information of the cell of the low-altitude base station, and issue, to the flight device, a reception of a neighbor cell measurement control message. The neighbor cells may include intra-frequency neighbor cells, inter-frequency neighbor cells, and inter-system neighbor cells.

In the embodiments of the present disclosure, by acquiring neighbor cell information of a cell of a ground base station through the ground base station, and then determining neighbor cell information of a cell of a low-altitude base station based on the mapping relationship between the cell of the ground base station and the cell of the low-altitude base station, the network efficiency of the ground base station is fully utilized.

Step S203: adjusting, according to the neighbor cell information of the cell of the low-altitude base station and the flight state information, an operating state of a neighbor cell of the cell of the low-altitude base station.

The low-altitude base station in the embodiments of the present disclosure can identify the flight state and flight trajectory of the flight device, and can adjust the operating state of the neighbor cell of the cell of the low-altitude base station according to the flight state and flight trajectory of the flight device.

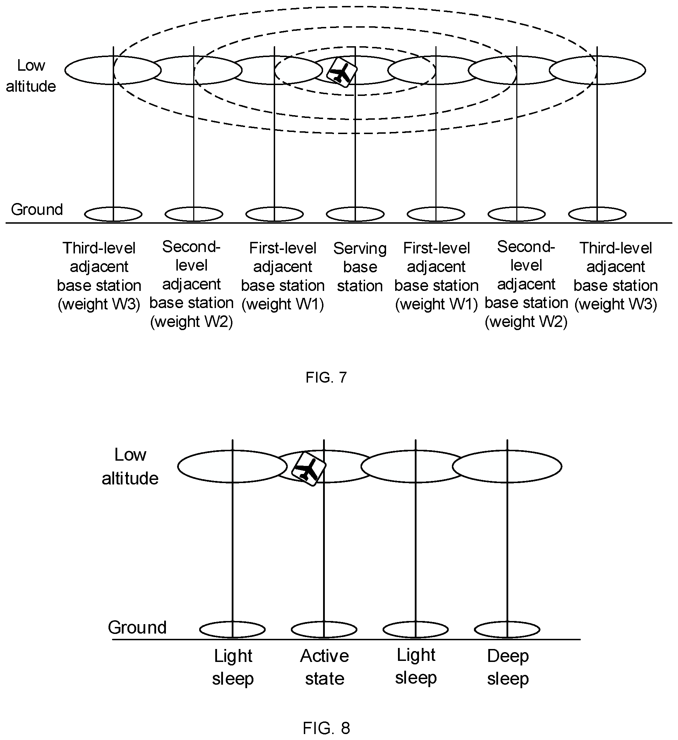

As an example, FIG. 7 is a schematic diagram of a relationship between a low-altitude base station and a ground base station according to an embodiment of the present disclosure. As shown in FIG. 7, the neighbor cell information of the cell of the low-altitude base station may include neighbor cell weight information. The cell of the low-altitude base station may dynamically adjust the operating state of the neighbor cell of the cell of the low-altitude base station according to the neighbor cell weight information.

As an example, the operating state may include sleep states, such as light sleep and deep sleep. According to the flight state information of the flight device, the sleep states of different neighbor cells of cells of low-altitude base stations may be dynamically adjusted, thereby achieving energy saving and consumption reduction.

As an example, light sleep is a sleep state that can be woken up in real time, and deep sleep is a sleep state with a longer wake-up time. Deep sleep has the best energy saving effect.

For example, FIG. 8 is a schematic diagram of an energy saving state of a cell of a low-altitude base station according to an embodiment of the present disclosure. Referring to FIG. 7 and FIG. 8, an adjacent low-altitude base station within a first-level adjacent range (i.e., a relatively close range) may adopt light sleep, and an adjacent low-altitude base station within a second-level or higher adjacent range may adopt deep sleep.

As an example, the flight state information may include flight speed information, flight altitude information, and the like. If the flight speed of the flight device is relatively high, the low-altitude base station may initiate a neighbor cell acquisition request to adjacent base stations of different weights, such as first-level, second-level, third-level adjacent base stations, according to the flight speed information or the flight altitude information, so as to acquire more neighbor cell information.

In the embodiments of the present disclosure, by acquiring the neighbor cell information of the cell of the low-altitude base station, dynamic adjustment of the operating state of the cell of the low-altitude base station can be achieved, thereby maximizing energy saving.

The following further describes the process of acquiring neighbor cell information through an example.

### Example 2:

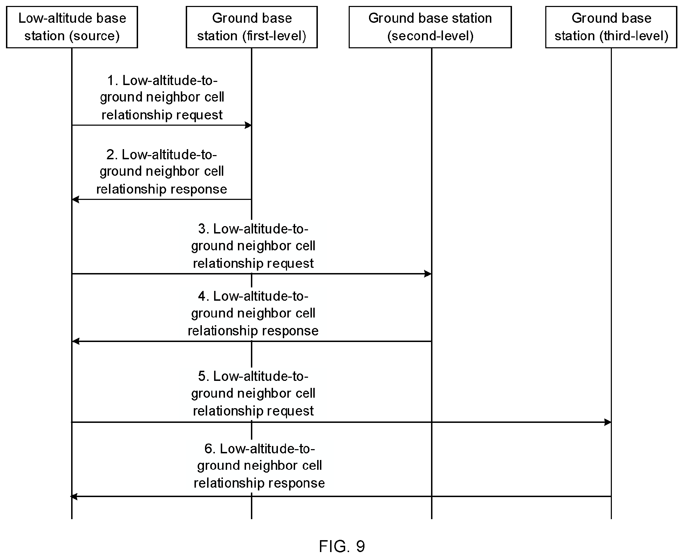

FIG. 9 is a flowchart of neighbor cell information acquisition according to an embodiment of the present disclosure. The ground base stations may be classified into first-level ground base stations, second-level ground base stations, third-level ground base stations, etc. according to the configuration relationship between the low-altitude base station and the ground base stations, wherein a first-level ground base station may be a base station matched with the low-altitude base station (source). As shown in FIG. 9:
1. The low-altitude base station (source) initiates a low-altitude-to-ground relationship request to the first-level ground base station.
   When detecting an access request or a handover request for a cell service, the low-altitude base station (source) may initiate the low-altitude-to-ground relationship request to the first-level ground base station. The first-level ground base station may merge the low-altitude-to-ground neighbor cell relationships of the ground base stations and then feed back the merged result to the low-altitude base station (source).
2. The low-altitude base station (source) may determine, according to the flight speed, flight trajectory, and service state of the flight device, whether it is necessary to initiate a low-altitude-to-ground neighbor cell relationship request to a second-level ground base station.
   In a case where the second-level ground base station receives the low-altitude-to-ground neighbor cell relationship request initiated by the low-altitude base station (source), the second-level ground base station merges the low-altitude-to-ground neighbor cell relationships of the second-level ground base station and then feeds back the merged result to the low-altitude base station (source).
3. The low-altitude base station (source) determines, according to the flight speed, flight trajectory, and service state of the flight device, whether a larger range of low-altitude-to-ground neighbor cell relationships is needed.

If needed, it may initiate a low-altitude-to-ground neighbor cell relationship request to a third-level ground base station.

The third-level ground base station may, based on the low-altitude-to-ground neighbor cell relationship request, merge the low-altitude-to-ground neighbor cell relationships of the third-level ground base station and then feed back the merged result to the low-altitude base station (source).

In the embodiments of the present disclosure, the low-altitude base station receives the cell change request initiated by the flight device, and acquires, based on the cell change request, the preset cell correspondence table and the flight state information of the flight device from the low-altitude resource pool; determines, according to the preset cell correspondence table, neighbor cell information of a cell of the low-altitude base station; and adjusts, according to the neighbor cell information of the cell of the low-altitude base station and the flight state information, the operating state of a neighbor cell of the cell of the low-altitude base station. The low-altitude resource pool enables interconnection and intercommunication between cells of low-altitude base stations, making maintenance of neighbor cell relationships of cells of low-altitude base stations simpler, and also enables dynamic adjustment of operating states of cells of low-altitude base stations based on the acquired neighbor cell information of the cells of the low-altitude base stations, thereby maximizing energy saving.

Through the description of the above implementations, those skilled in the art can clearly understand that the method according to the above embodiments can be implemented by means of software plus a necessary universal hardware platform, and of course also by hardware, but in many cases the former is a better implementation. Based on such an understanding, the technical solution of the present disclosure, essentially or the part contributing to the prior art, may be embodied in the form of a software product. The computer software product is stored in a storage medium (such as ROM/RAM, a magnetic disk, or an optical disk), and includes several instructions for causing a terminal device (which may be a mobile phone, a computer, a server, or a network device, etc.) to execute the method described in the various embodiments of the present disclosure.

Embodiments of the present disclosure further provide a computer-readable storage medium. The computer-readable storage medium stores a computer program, wherein the computer program is configured to, when being run, implement steps in any one of the above method embodiments.

In an exemplary embodiment, the above computer-readable storage medium may include, but is not limited to, any medium that can store a computer program, such as a USB flash drive, a Read-Only Memory (ROM), a Random Access Memory (RAM), a removable hard disk, a magnetic disk, or an optical disk.

Embodiments of the present disclosure further provide an electronic device, including a memory and a processor. The memory stores a computer program, and the processor is configured to run the computer program to execute steps in any one of the above method embodiments.

In an exemplary embodiment, the above electronic device may further include a transmission device and an input/output device, wherein the transmission device is connected to the processor, and the input/output device is connected to the processor.

For specific examples in this embodiment, reference may be made to the examples described in the above embodiments and exemplary implementations, and details are not repeatedly described in this embodiment.

Obviously, those skilled in the art should understand that each module or each step of the present disclosure as described above may be implemented by a universal computing device, they may be centralized on a single computing device or distributed on a network composed of a plurality of computing devices, they may be implemented by program codes executable by a computing device, and thus may be stored in a storage device and executed by the computing device. In some cases, the steps shown or described may be executed in an order different from that described here, or they may be respectively fabricated into individual integrated circuit modules, or a plurality of modules or steps thereof may be fabricated into a single integrated circuit module for implementation. As such, the present disclosure is not limited to any specific combination of hardware and software.

The above descriptions are merely exemplary embodiments of the present disclosure and are not intended to limit the present disclosure. For those skilled in the art, the present disclosure may have various modifications and changes. Any modifications, equivalent replacements, improvements, etc., made within the principle of the present disclosure shall be included within the scope of protection of the present disclosure.

## Claims

1. A low-altitude base station and ground base station collaborative management method, applied to a low-altitude base station, the method comprising:
receiving a cell change request initiated by a flight device, and acquiring a preset cell correspondence table and flight state information of the flight device from a low-altitude resource pool based on the cell change request;
determining, according to the preset cell correspondence table, neighbor cell information of a cell of the low-altitude base station; and
adjusting, according to the neighbor cell information of the cell of the low-altitude base station and the flight state information, an operating state of a neighbor cell of the cell of the low-altitude base station.

2. The method according to claim 1, wherein the preset cell correspondence table comprises a mapping relationship between a cell of the low-altitude base station and a cell of the ground base station; and the determining, according to the preset cell correspondence table, neighbor cell information of a cell of the low-altitude base station comprises:
acquiring, from a ground base station matched with the low-altitude base station, neighbor cell information of a cell of the ground base station; and
determining, according to the mapping relationship between the cell of the low-altitude base station and the cell of the ground base station, and the neighbor cell information of the cell of the ground base station, the neighbor cell information of the cell of the low-altitude base station.

3. The method according to claim 2, wherein before the receiving a cell change request initiated by a flight device, the method further comprises:
establishing, based on a matching relationship between the low-altitude base station and the ground base station and a transmission relationship between the ground base station and an adjacent base station of the ground base station, a communication link with an adjacent base station of the low-altitude base station to form the low-altitude resource pool.

4. The method according to claim 3, wherein the forming, based on a matching relationship between the low-altitude base station and the ground base station and a transmission relationship between the ground base station and an adjacent base station of the ground base station, the low-altitude resource pool with an adjacent base station of the low-altitude base station comprises:
sending a low-altitude base station pooling request to the ground base station matched with the low-altitude base station, so that the ground base station sends the low-altitude base station pooling request to the adjacent base station of the ground base station according to the low-altitude base station pooling request and the transmission relationship between the ground base station and the adjacent base station of the ground base station;
forwarding, by the adjacent base station of the ground base station, the low-altitude base station pooling request to the adjacent base station of the low-altitude base station that is matched with the adjacent base station of the ground base station;
in response to the adjacent base station of the low-altitude base station responding to the low-altitude base station pooling request, receiving, by the adjacent base station of the ground base station, a low-altitude base station pooling response message sent by the adjacent base station of the low-altitude base station, and forwarding the low-altitude base station pooling response message to the ground base station; and
receiving the low-altitude base station pooling response message sent by the ground base station, and establishing the communication link with the adjacent base station of the low-altitude base station to form the low-altitude resource pool.

5. The method according to claim 4, before the sending a low-altitude base station pooling request to the ground base station matched with the low-altitude base station, the method further comprises:
determining a base station configuration mode of the low-altitude base station and the ground base station, wherein the base station configuration mode comprises a co-site configuration of the low-altitude base station and the ground base station;
in response to the low-altitude base station and the ground base station being in the co-site configuration, sending a matching request to the ground base station, so that the ground base station performs a matching response according to the matching request; and
receiving the matching response sent by the ground base station, establishing a matching relationship between the low-altitude base station and the ground base station, and maintaining the matching relationship.

6. The method according to claim 5, wherein the base station configuration mode further comprises a non-co-site configuration of the low-altitude base station and the ground base station, and the method further comprises:
in response to the low-altitude base station and the ground base station being in the non-co-site configuration, sending a link establishment request to the ground base station and the adjacent base station of the ground base station, respectively;
in response to receiving a link establishment response sent by the ground base station or the adjacent base station of the ground base station, establishing a communication link with the ground base station or the adjacent base station of the ground base station, and determining the ground base station or the adjacent base station of the ground base station that sent the link establishment response as the ground base station matched with the low-altitude base station.

7. The method according to claim 3, further comprising:
in response to the flight device failing to hand over a cell, receiving a request for re-establishing a UE context sent by the adjacent base station of the low-altitude base station, wherein the request for re-establishing a UE context carries a transmission address of the adjacent base station of the low-altitude base station; and
responding to the request for re-establishing a UE context, and establishing, based on the transmission address of the adjacent base station of the low-altitude base station, a communication link with the adjacent base station of the low-altitude base station to form the low-altitude resource pool.

8. The method according to claim 5, before the acquiring a preset cell correspondence table and flight state information of the flight device from a low-altitude resource pool based on the cell change request, the method further comprises:
matching, based on the base station configuration mode, the cell of the low-altitude base station and the cell of the ground base station in the low-altitude resource pool to establish the mapping relationship between the cell of the low-altitude base station and the cell of the ground base station.

9. A computer-readable storage medium, having a computer program stored therein, wherein the computer program is configured to, when being executed by a processor, implement steps of the method according to any one of claims 1 to 8.

10. An electronic device, comprising a memory, a processor, and a computer program that is stored in the memory and executable by the processor, wherein the processor is configured to, when executing the computer program, implement steps of the method according to any one of claims 1 to 8.
